# EUROPÄISCHE PATENTSCHRIFT

(11) **EP 2 723 513 B1**
(45) Veröffentlichungstag und Bekanntmachung des Hinweises auf die Patenterteilung: **27.04.2016**
(21) Anmeldenummer: 12731382.3
(22) Anmeldetag: 22.06.2012
(51) Int. Cl.: B21B 35/14, F16D 3/18

(54) **VERZAHNUNG ZUM BETRIEB UNTER EINEM AUSLENKWINKEL UND HERSTELLUNGSVERFAHREN**
TOOTHING FOR OPERATION AT A DEFLECTION ANGLE AND PRODUCTION METHOD
DENTURE POUR UTILISATION AVEC UN ANGLE DE DÉVIATION ET PROCÉDÉ DE FABRICATION

(30) Priorität: 24.06.2011 DE 102011078071; 29.07.2011 DE 102011080130
(43) Veröffentlichungstag der Anmeldung: 30.04.2014
(73) Patentinhaber: SMS group GmbH, 40237 Düsseldorf (DE)
(72) Erfinder: MERZ, Jürgen, 57223 Kreuztal (DE)
(74) Vertreter: Klüppel, Walter
(86) Internationale Anmeldenummer: PCT/EP2012/062160
(87) Internationale Veröffentlichungsnummer: WO 2012/175719

(56) Entgegenhaltungen:
- DE-A1- 3 915 976
- GB-A- 1 034 305
- US-A- 6 026 700
- MANCUSO J R ET AL: "GEAR SPINDLES FOR COMPACT HOT STRIP MILLS", AISE STEEL TECHNOLOGY, AISE, PITTSBURG, PA, US, Bd. 78, Nr. 6, 1. Juni 2001 (2001-06-01), Seiten 38-43, XP001100533, ISSN: 0021-1559

## Beschreibung

### Gebiet der Erfindung

Die Erfindung bewegt sich auf dem Gebiet der Verzahnungen, insbesondere einer Antriebsspindel zum Antrieb einer Walze in Walzwerken oder Stranggussanlagen. Die Erfindung betrifft eine Steckverzahnung nach dem Oberbegriff des Anspruchs 1 und ein Herstellungsverfahren für eine solche Verzahnung.

### Stand der Technik

Bei gewissen Anwendungen sind Krafttibertragungen von einem Antrieb zu einer Welle unter einem Winkel erfordert. Diese Anforderung ergibt sich zum Beispiel häufig in Walzwerken. Sind bspw. zwei Arbeitswalzen übereinander angeordnet, so können sich durch deren relativ geringen Durchmesser Probleme bei einer gewünschten Erhöhung des zu übertragenden Drehmoments ergeben. Soll das zu übertragende Drehmoment erhöht werden, muss bisher der Durchmesser der Arbeitswalzen vergrößert werden, was unter anderem zu Energleverlusten führt. Darüber hinaus muss in diesem Fall auch das Walzgerüst stärker ausgelegt werden.

Bisherige Systeme weisen daher zum Beispiel kardanische Gelenke auf, die sich zwischen Antriebsspindel und der Walze befinden, aber den Anforderungen der erhöhten Drehmomentübertragung nicht gerecht werden.

Die Druckschrift GB 1,034,305 beschreibt eine Steckverzahnung als Kupplung zwischen einer Welle und einer Walze. Die Steckverzahnung weist alle Merkmale des Oberbegriffs des Anspruchs 1 auf.

Ordnet man die Antriebsspindel mittels einer Steckverzahnung unter einem Winkel zur Walze an, kann die Antriebsspindel zwar zur Übertragung größerer

Walzmomente ausgebildet werden, allerdings führt die bei den Antriebsspindeln übliche, klassische Verzahnung zu einem Kantentragen, wodurch letztendlioh ein sehr hoher Verschleiß hervorgerufen wird und nach wie vor keine Übertragung der gewünschten höheren Momente möglich ist.

Es ist die Aufgabe der Erfindung, bei einer Steckverzahnung einen Auslenkwinkel zwischen einer Verzahnung und einer komplementären zweiten Verzahnung zu ermöglichen, bei der mehr Drehmoment übertragen werden kann, als es bisher der Fall ist. Darüber hinaus besteht die Aufgabe der Erfindung in der Bereitstellung eines Verfahrens zur Herstellung einer derartigen Steckverzahnung und einer Vorrichtung zum Antrieb einer Walze einer hüttenmännischen Anlage, umfassend eine Welle und eine erfindungsgemäße Steckverzahnung.

Diese Aufgabe wird für eine eingangs genannte Steckverzahnung erfindungsgemäß mit den Merkmalen des Anspruchs 1 gelöst.

Bei dieser erfindungsgemäßen Modifikation kann die Verzahnung unter einem Auslenkwinkel mit der zweiten Verzahnung betrieben werden und mehr Drehmoment übertragen, als dies ohne diese Modifikation der Fall wäre. Insbesondere wird durch die aufgeführte Modifikation ein Kantentragen verhindert, das einer erhöhten Drehmomentübertragung Im Wege steht.

Bevorzugt können weitere Modifikationen alleine oder miteinander kombiniert ausgebildet sein, zum Beispiel eine Rücknahme am Zahnfuß und/oder eine Rücknahme am Zahnkopf jeweils In Verbindung mit der beanspruchten Verschränkung.

Unter einer Rücknahme am Zahnfuß oder Zahnkopf ist im Sinne der Erfindung zu verstehen, dass die Profillinie gegenüber einer herkömmlichen Formgebung zurück bleibt, und zwar insbesondere im Bereich einer Berührung der Zahnflanken in einem normalen Betrieb.

Weiterhin kann durch die Erfindung insbesondere das übertragbare Drehmoment von einer Antriebsspindel zu einer Walze erhöht werden und/oder der Auslenkwinkel zwischen einer Antriebsspindel und einer Walze vergrößert werden. Ohne die vorgestellten Modifikationen wird der Traganteil der Flanken bei zunehmenden Auslenkwinkeln, die größer als Null sind, kleiner, so dass bei steigendem Auslenkwinkel zunehmend weniger Drehmoment übertragen werden kann. Mit der erfindungsgemäßen Verzahnung kann die Last über die Zahnhöhe gleichmäßig verteilt werden. So kann zum Beispiel eine Antriebsspindel in bestimmten Fällen 50% mehr Drehmoment übertragen, wodurch größere Bandbreiten gewalzt werden können. Bei einer weiteren Steigerung des übertragbaren Moments können Arbeitswalzen sogar kleiner ausgelegt werden.

In einer bevorzugten Ausführungsform der Verzahnung ist die Verzahnung als Evolventenverzahnung ausgeführt, wobei die Zahnfüße und/oder die Zahnköpfe bevorzugt, aber nicht notwendig zumindest parabolisch zurückgenommen sind. Unter einer zumindest parabolischen Rücknahme ist zu verstehen, dass die Profildifferenz zwischen der theoretischen Flanke einer Evolventenverzahnung und der erfindungsgemäß zurückgenommenen Flanke als Funktion des Abrollweges über das Profil der Evolventenverzahnung wenigstens etwa mit der zweiten Potenz ansteigt. Besonders bevorzugt ist die Rücknahme dabei im Wesentlichen parabelförmig.

Durch die parabolische Rücknahme der Zahnfüße und - köpfe, kann das Kantentragen verringert werden und damit die Drehmomentübertragung verbessert werden.

In einer weiteren bevorzugten Ausführungsform der Verzahnung sind die Zahnfüße am Fußkreis zwischen 0,2% und 3% der Zahndicke am Teilkreis zurückgenommen und/oder die Zahnköpfe am Kopfkreis zwischen 0,1% und 2% der Zahndicke am Teilkreis zurückgenommen.

Durch diese Werte der Profilmodifizierung eines jeden Zahns, kann die Kraftübertragung beim Eingriff der Verzahnungen optimiert werden.

In einer weiteren bevorzugten Ausführungsform der Verzahnung, setzt die Zahnkopfrücknahme zwischen 50% und 70% der Zahnhöhe ein und/oder die Zahnfußrücknahme zwischen 50% und 60% der Zahnhöhe ein.

Durch diese genauen Angaben für die Rücknahme des Kopfes oder des Fußes relativ zur jeweiligen Zahnhöhe, kann das übertragbare Drehmoment weiter optimiert werden.

In einer weiteren bevorzugten Ausführungsform der Verzahnung ist die Mantellinie in Breitenrichtung symmetrisch gewölbt. Unter der Mantellinie ist auf bekannte Weise der Verlauf des Bodens zwischen zwei benachbarten Zähnen zu verstehen.

Durch das Formen einer gewölbten Mantellinie kann die Drehmomentübertragung abermals weiter gesteigert werden.

In einer weiteren bevorzugten Ausführungsform der Verzahnung ist die Wölbung der Flankenlinie derart ausgebildet, dass die Differenz der größten Dicke eines jeden Zahns auf der Höhe des Teilkreises und der kleinsten Dicke eines jeden Zahns auf der Höhe des Teilkreises, einem Wert zwischen 3% und 20% der größten Dicke eines jeden Zahns auf der Höhe des Teilkreises entspricht.

Dieses Merkmal präzisiert eine vorteilhafte Gestalt einer Wölbung der Flankenlinie.

In einer weiteren bevorzugten Ausführungsform der Verzahnung ist die Schränkung der Zähne durch eine maximale Profilwinkelabweichung zwischen 0,3° und 1,5° gebildet.

Dieser zwar relativ geringe Wert der Schränkung verbessert die Drehmomentübertragung beim Eingriff der Verzahnung in eine zweite Verzahnung unter einem Winkel deutlich.

In einer weiteren bevorzugten Ausführungsform der Verzahnung ist die Schränkung der Zähne in Richtung der Flanke der Zähne parabelförmig ausgebildet. Dies bedeutet, dass eine Profilwinkelabweichung als Funktion über die Breite des Zahns einen im Wesentlichen parabelförmlgen Verlauf aufweist.

Die Aufgabe der Erfindung wird für ein eingangs genanntes Herntellungsverfahren für eine Verzahnung zudem durch die Merkmale des Anspruchs 14 gelöst.
Unter einer Erstellung einer Verzahnung ist zunächst Jedes bekannte Verfahren zu verstehen, mittels dessen eine Grundform der Verzahnung unter eingeschränkter Formgebung hergestellt wird, z.B. Wälzfräsen o.ä.. Die Nachbearbeitung zur Erfangung einer erfindungsgemäßen Verzahnung kann insbesondere mittels Schleifen in einer frei beweglichen Bearbeitungsmaschine erfolgen, zum Beispiel einer 4-Achsen oder 5-Achsen-Maschine.
In einer bevorzugten Ausführungsform des Verfahrens liegt die Bogenverzahnung nach dem Erstellen als Evolventenverzahnung vor und die Zahnfüße und/oder Zahnköpfe werden beim Nachbearbeiten zumindest parabolisch zurückgenommen.

In einer weiteren bevorzugten Ausführungsform des Verfahrens erfolgt die Nachbearbeitung In mindestens einem der Schritte durch mindestens einen Schleifvorgang oder durch genau einen Schleifvorgang pro Zahnflanke.

Des Weiteren umfasst die Erfindung eine Vorrichtung zum Antrieb einer Walze einer hüttenmännischen Anlage, umfassend eine Welle und eine erfindungsgemäße Steckverzahnung. Eine solche Welle kann zum Beispiel unmittelbar in eine korrespondierende Aufnahme an einer Walze und/oder einem Motor nach Art einer Steckverzahnung eingesetzt sein. Die Aufnahme kann insbesondere eine Innenverzahnung aufweisen, die ebenfalls erfindungsgemäß ausgeformt sein kann. Die Innenverzahnung kann bei einer möglichen

Ausführungsform eine Geradverzahnung aufweisen, in der die Welle bzw. deren Verzahnung um einen definierten Hub axial verschiebbar aufgenommen Ist.

Bei einer vorteilhaften Ausführungsform der Vorrichtung ist die Verzahnung eine Steckverzahnung nach einem der Ansprüche 1 bis 9 an beiden Enden der Welle ausgebildet. Hierdurch wird eine Zwischenwelle bereitgestellt, die an beiden Enden über eine gewinkelte Steckverzahnung verbunden ist und so einen besonders großen Winkel bzw. bei vorgegebenem Winkel die Übertragung eines besonders großen Drehmoments ermöglicht.

In bevorzugter Ausführungsform sind die Welle und die Walze in einem Auslenkwinkel von mehr als 0°, insbesondere mehr als 0,2°, zueinander angeordnet. Besonders bevorzugt beträgt der Auslenkwinkel dabei nicht mehr als etwa 5°, insbesondere zwischen etwa 2° und etwa 5°.

### Kurze Beschreibung der Figuren

Im Folgenden werden kurz die Figuren der Ausführungsbeispiele beschrieben. Weitere Details sind der detaillierten Beschreibung der Ausführungebeispiele zu entnehmen.

Es zeigen:
- Figur 1: einen Teil-Querschnitt über die Höhe eines Zahns eines erfindungsgemäßen Ausführungsbeispiels, in dem schematisch eine erfindungsgemäße Profilmadifikation der rechten Flanke des Zahns gezeigt ist, Insbesondere die Zahnfuß- sowie die Zahnkopfrücknahme;
- Figur 2: eine schematische Draufsicht eines erfindungsgemäßen Ausführungsbeispiels mit eingezeichneter Schnittebene B-B;
- Figur 3: den schematischen Schnitt B-B aus Figur 2 in einer Draufsicht;
- Figur 4: die Detailansicht aus Figur 3, in gleicher Perspektive, mit schematischer Darstellung einer erfindungsgemäßen Modifikation der Flankenlinie;
- Figur 5: ein schematisches Diagramm eines Ausführungsbeispiels im Falle einer Schränkung mit der Profilwinkeländerung ϕ, in Grad, aufgetragen gegen die Z-Richtung, in beliebigen Wegeinheiten, welche in Breitenrichtung der Verzahnung verläuft.
- Fig. 6: eine teilweise Ansicht einer erfindungsgemäßen Vorrichtung zum Antrieb von Walzen einer hüttenmännischen Anlage.
- Fig. 7: eine Detailvergrößerung der Vorrichtung aus Fig. 6.

### Detaillierte Beschreibung der Ausführungsbeispiele

Zunächst sei bemerkt, dass Begriffe wie Teilkreis, Kopfkreis, Fußkreis, Mantellinie, Flankenlinie, Eingriffswinkel, Schränkung und andere dem Fachmann allgemein bekannt sind und daher ohne weitere Erklärung in der folgenden Beschreibung verwendet werden.

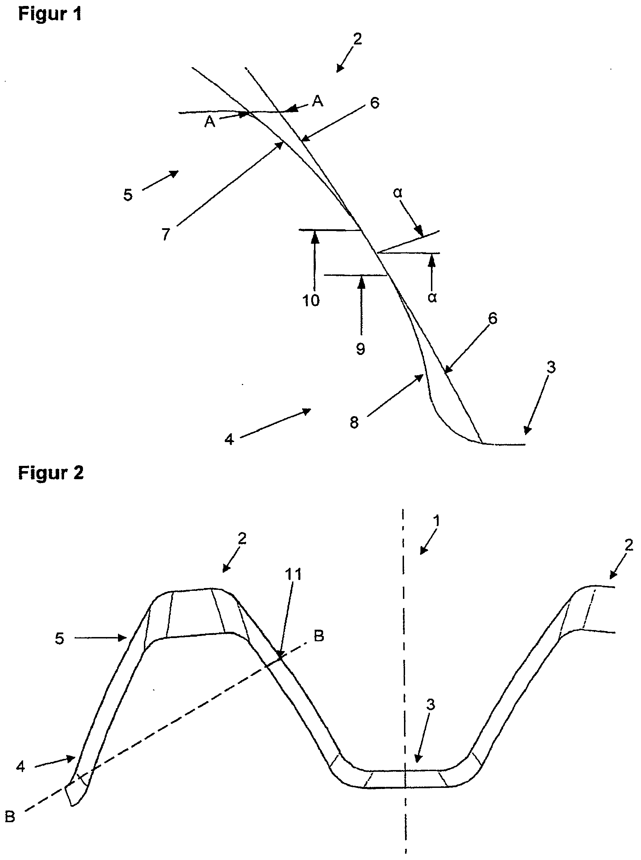

Figur 1 zeigt einen schematischen Querschnitt durch eine Flanke eines Zahns 2 einer Verzahnung 1. Die Flankenlinie verläuft konvex gebogen, weshalb grundsätzlich auch von einer Bogenverzahnung gesprochen werden kann. Rechts neben dieser Flanke befindet sich eine Zahnlücke 3. Die Rotationsachse der Verzahnung 1 liegt senkrecht zur gezeigten Querschnittsebene. Der Eingriffswinkel α der Verzahnung kann verschiedene Werte aufweisen, insbesondere kann er bevorzugt Werte zwischen 26° und 34° annehmen. Die Linie 6 stellt die Profillinie eines Zahns 2 in Form einer klassischen Evolventenlinie 6 einer bekannten Evolventenverzahnung dar. Allerdings kann erfindungsgemäß der Fuß 4 und/oder auch der Kopf 5 des Zahns 2 zurückgenommen werden, das heißt vorzugsweise weiter gegenüber der klassischen Evolventenform abgeschliffen werden. Die Rücknahme des Zahnkopfes 5 ist durch die Linie 7 dargestellt, die des Zahnfußes 4 durch die Linie 8. Die Rücknahme des Zahnkopfes 5 am Kopfkreis ist schematisch durch die Strecke bzw. den Abstand A-A dargestellt. Die Radien bzw. Durchmesser bei denen die Rücknahmen des Zahnfußes 4 bzw. des Zahnkopfes 5 ansetzen, sind mit den Bezugszeichen 9, 10 gekennzeichnet. Zwischen diesen Punkten 9, 10 entspricht der Verlauf der Flanke des Zahns 2 vorzugweise der Evolventenform 6, kann aber auch andere übliche Verläufe beschreiben. Die in Figur 1 eingezeichnete Zahnkopfrücknahme und Zahnfußrücknahme ist stark überhöht dargestellt und daher als schematisch zu verstehen. Gleiches gilt für die Radien 9, 10. Die Zahnfußrücknahme kann verschiedene Werte annehmen, beträgt jedoch vorzugsweise am Fußkreis zwischen 0,2% und 3% der am Teilkreis gemessenen Zahndicke, wobei die Dickenrichtung senkrecht zur Breitenrichtung der Verzahnung 1 steht. Die Zahnköpfe 5 sind vorzugsweise um 0,1% bis 2% am Kopfkreis bzw. auf Höhe des Kopfkreises der Zahndicke (gemessen am Teilkreis) zurückgenommen. Die Rücknahme des Zahnkopfes 5 beginnt vorzugsweise bzw. setzt zwischen 50% und 70% der Zahnhöhe ein und/oder die des Zahnfußes 4 zwischen 50% und 60% der Zahnhöhe. Die Zahnhöhe ist dabei als die Differenz der Radien des Kopfkreises und des Fußkreises definiert. Anders ausgedrückt heißt das, dass die Kopf- bzw. Fußrücknahmen bei Radien einsetzen, die den obigen prozentualen Anteilen der Differenz von Kopf- und Fußkreisradius entsprechen.

Figur 2 zeigt ebenfalls einen schematischen Querschnitt durch eine erfindungsgemäße Verzahnung 1, jedoch ist nun eine Wölbung bzw. Modifikation der Mantellinie hervorgehoben. Die Ansicht ist als zweidimensional zu verstehen. Sichtbar sind die Zähne 2 der Verzahnung 1 sowie eine Zahnlücke 3 zwischen den Zähnen 2. Die Linie am oberen Ende des linken Zahns 2 stellt die höchste Stelle der in Breitenrichtung (Richtung der Rotationsachse der Verzahnung oder im folgenden Z-Richtung) gewölbten Mantellinie dar. Die untere Begrenzungslinie des linken Zahns 2 stellt die Mantellinie am Rand der Verzahnung 1, in Breitenrichtung gesehen, dar. Die Wölbung der Mantellinie wird vorzugsweise durch einen Schleifvorgang aus einer klassisch geformten bzw. hergestellten Verzahnung erhalten. Es sind aber auch andere dem Fachmann bekannte Bearbeitungsverfahren anwendbar. Die Wölbung ist dabei vorzugsweise in Breitenrichtung gesehen (spiegel) symmetrisch zur Mitte der Verzahnung 1 und ist insbesondere nach außen gewölbt bzw. konvex.

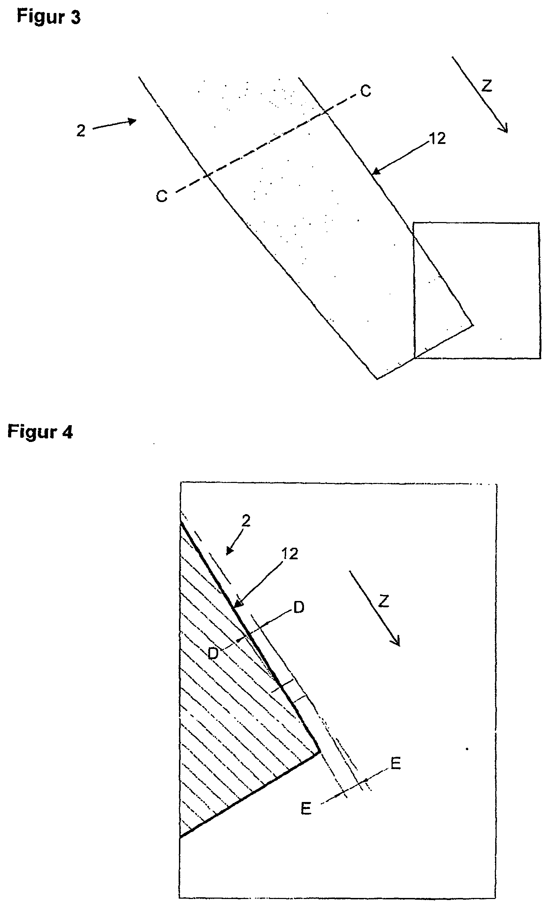

Durch die Strecke B-B ist in Figur 2 eine Schnittebene eingezeichnet, die in Figur 3 gezeigt und erläutert ist. Die Schnittebene B-B verläuft dabei durch den Schnittpunkt des Teilkreises der Verzahnung 1 mit der Evolvente 6 eines Zahns 2.

Demnach ist im Schnitt der Figur 3 die Flankenlinie 12 an der rechten Flanke des Zahns 2 in einer Draufsicht dargestellt. Die Strecke C-C kennzeichnet der Übersichtlichkeit halber die Mittenachse des Zahns 2, die senkrecht zur Breitenrichtung, das heißt in Dickenrichtung des Zahns 2 verläuft. Rechts unten in Figur 3 ist ein Rechteck eingezeichnet, das einen Ausschnitt kennzeichnet, der detailliert in Figur 4 dargestellt ist.

In Figur 4 ist das Ende der Flankenlinie 12, in Breitenrichtung Z gesehen, gezeigt. Die Strecke D-D kennzeichnet die Rücknahme der Flankenlinie 12 an einer ersten Stelle. Die Flankenlinie 12 ist insbesondere nach außen bzw. konvex gewölbt. Die Rücknahme der Flankenlinie 12 kann vorzugsweise durch einen Schleifvorgang erfolgen, aber auch durch andere dem Fachmann bekannte Verfahren. Die Flankenlinienmodifikation bzw. Rücknahme der Flankenlinie 12 am Rand der Verzahnung 1, in Breitenrichtung gesehen, weist den Betrag der Strecke E-E auf. Die Maße in der Zeichnung sind hier als rein schematisch zu verstehen. Die Rücknahme der Flankenlinie am Rand der Verzahnung 1 in Breitenrichtung kann bevorzugt zwischen 3% und 20% der Dicke eines Zahns 2 einer Geradverzahnung betragen, bzw. zwischen 3% und 20% der Dicke am Punkt der maximalen Dicke des Zahns 2 auf Höhe des Teilkreises liegen.

Insgesamt gesehen ist die Rücknahme der Flankenlinie in Figur 4 am Rand der Verzahnung 1 in Breitenrichtung gesehen jedoch stärker als lediglich durch die Strecke E-E gekennzeichnet. Die weitere, dargestellte Rücknahme in Bezug auf den in diesem Fall geradverzahnten Zahn 2, ist durch eine optionale Schränkung, das heißt durch eine Verdrillung des Zahns 2, erfolgt.

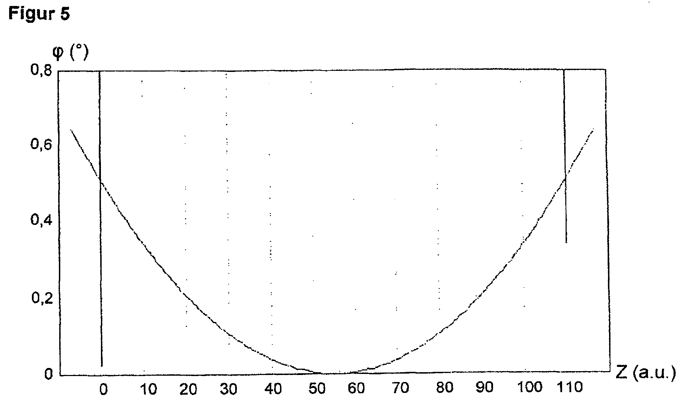

Eine solche Schränkung eines Zahns lässt sich durch eine Profilwinkeländerung ϕ in Richtung der Z-Richtung bzw. der Flanke des Zahns 2 beschreiben. Beispielhafte Details für eine solche Schränkung sind im Diagramm der Figur 5 aufgetragen.

Figur 5 zeigt den, vorzugsweise parabolischen, Verlauf einer Schränkung in Z-Richtung. Dabei ist die Profilwinkelabweichung ϕ in der Einheit Grad gegen die Breite der Verzahnung 1 in Z-Richtung aufgetragen. Die Zahlen an der Z-Achse sind nur als Beispiel für eine Breite einer Verzahnung 1 von 110 zu verstehen, wobei die Streckeneinheit ein beliebiges Längenmaß darstellt. Ersichtlich ist, dass die Profilwinkelabweichung in der Mitte der Verzahnung 1 in Breitenrichtung gesehen nahezu gleich Null ist und an den Rändern der Verzahnung 1 am stärksten ausfällt. In diesem Beispiel ca. 0,5° am Rand. Es sind aber auch andere Größen von Schränkungen denkbar, wie zum Beispiel Schränkungen mit einer maximalen Profilwinkelabweichung ϕ zwischen 0,3° und 1,5°.

Sämtliche oben genannte Zahlenwerte gelten insbesondere für Auslenkwinkel zwischen der Verzahnung 1 und einer zweiten Verzahnung, vorzugsweise einer Innenverzahnung, zwischen 0° und 5° und besonders vorteilhaft zwischen 2° und 5°.

Die zweite Verzahnung kann dabei direkt mit ihrer Rotationsachse auf der Achse einer Walze liegen. Außerdem kann die zweite Verzahnung direkt in die Walze integriert sein oder auch in einem Treffer liegen, der mit einem Walzenzapfen einer Walze verbindbar oder verbunden ist, wobei seine Rotationsachse vorzugsweise mit der der Walze übereinstimmt. Solch ein Treffer verbindet dann, wie allgemein üblich, die Walze mit der Antriebsspindel.

Die in den Ausführungsbeispielen beschriebene Verzahnung 1 ist vorzugsweise eine Geradverzahnung, d. h. vorzugsweise nicht schräg verzahnt. Gleiches gilt für die zweite Verzahnung, die vorzugweise durch eine Innenverzahnung gebildet ist.

Insbesondere kann die Verzahnung 1 in einer Antriebsspindel zum Antrieb einer Walze angeordnet sein, welche in einem Walzwerk einer Stranggussanlage oder einer anderen Bandprozesslinie vorgesehen ist. Der Aufbau solcher Antriebsspindeln ist allgemein bekannt. Die Verzahnung 1 kann einstückig mit einer Antriebsspindel ausgebildet sein oder auch an der Antriebsspindel montiert sein.

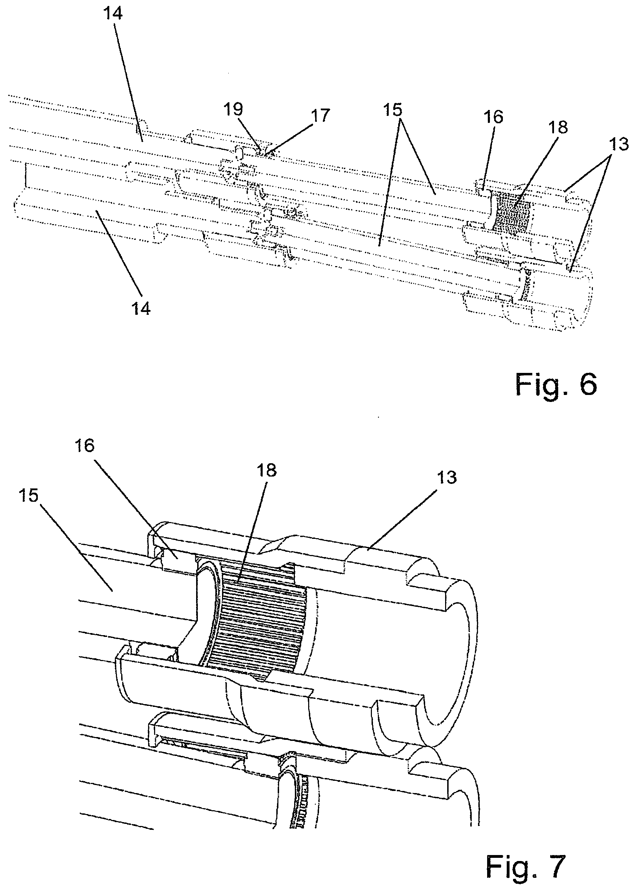

Die in Fig. 6 gezeigte Vorrichtung zum Antrieb von zwei zusammenwirkenden Walzen 13 eines Walzwerks umfasst für jede der Walzen 13 eine Ausgangswelle eines (nicht dargestellten) Motors oder Motorgetriebes 14, wobei zwischen den Walzen 13 und den Ausgangswellen 14 jeweils eine Zwischenwelle 15 angeordnet ist.

Die Zwischenwelle 15 hat an jeden Ende eine erfindungsgemäße Verzahnung 16, 17. Dabei greift die eine Verzahnung 16 nach Art einer Steckverzahnung in eine Innenverzahnung 18 der Walze 13 ein, und die andere Verzahnung 17 greift in eine Innenverzahnung 19 der Ausgangswelle 14 ein. Die Zwischenwelle ist dabei jeweils gegenüber der Walze 13 als auch gegenüber der Ausgangswelle 14 gewinkelt angeordnet. Insgesamt wird hierdurch ein erheblich größerer Abstand der Ausgangswellen 14 bzw. der Motoren und/oder Getriebe voneinander ermöglicht, als es dem parallelen Abstand der Achsen der Walzen 13 entspräche.

Die Innenverzahnungen 18 der Walzen 13 sind erkennbar als Geradverzahnungen ausgebildet, wobei je nach Anforderungen auch eine erfindungsgemäße Geradverzahnung vorlieben kann, also die Profillinien im Kopfbereich und/oder Fußbereich zurückgenommen sein können.

Die Innenverzahnungen 18 ermöglichen eine Verlagerung der eingreifenden Verzahnungen 16 der Zwischenwellen 15 in axialer Richtung um einen maximalen Hub, wodurch eine an sich bekannte axiale Verschiebung der Walzen 13 während des Walzvorgangs ermöglicht ist.

### Bezugszeichenliste

- 1.: Verzahnung
- 2.: Zahn
- 3.: Zahnlücke
- 4.: Zahnfuß
- 5.: Zahnkopf
- 6.: Evolvente
- 7.: Umriss des zurückgenommenen Zahnkopfes
- 8.: Umriss des zurückgenommenen Zahnfußes
- 9.: Radius der Zahnfußrücknahme
- 10.: Radius der Zahnkopfrücknahme
- 11.: Schnittpunkt des Teilkreises mit der Evolvente
- 12.: Flankenlinie
- 13.: Walze
- 14.: Ausgangswelle
- 15.: Zwischenwelle
- 16.: Verzahnung
- 17.: Verzahnung
- 18.: Innenverzahnung
- 19.: Innenverzahnung

- A-A: Zahnkopfrücknahme am Kopfkreis
- B-B: Schnitt durch einen Zahn
- C-C: Mittellinie der Verzahnung in Richtung der Zahndicke
- D-D: erster Betrag einer Flankenlinienrücknahme
- E-E: zweiter Betrag einer Flankenlinienrücknahme
- α: Eingriffswinkel
- ϕ: Profilwinkelabweichung
- Z: Breitenrichtung der Verzahnung

## Patentansprüche

1. Steckverzahnung mit einer in eine zweite Verzahnung eingreifenden Verzahnung (1), insbesondere einer Antriebsspindel zum Antrieb einer Walze (13) in Walzwerken oder Stranggussanlagen, wobei die Verzahnung (1) mehrere Zähne (2) umfasst, wobei eine Flankenlinie (12) der Zähne (2) eine Wölbung aufweist und ein Auslenkwinkel zwischen der Rotationsachse der zweiten Verzahnung und der Rotationsachse der Verzahnung ausgebildet ist, **dadurch gekennzeichnet,**
**dass** die Zähne (2) mit einer Schränkung in Form einer Profilwinkelabweichung
ϕ in Richtung der Flanke des Zahns (2) ausgebildet sind.

2. Steckverzahnung nach Anspruch 1,
**dadurch gekennzeichnet, dass**
die Flanken der Zähne (2) mit einer Zahnkopfprofilrücknahme gegenüber einer Evolventenform ausgebildet sind.

3. Steckverzahnung nach Anspruch 1 oder 2,
**dadurch gekennzeichnet, dass**
die Flanken der Zähne (2) mit einer Zahnfußprofilrücknahme gegenüber einer Evolventenform ausgebildet sind.

4. Steckverzahnung nach Anspruch 2 oder 3,
**dadurch gekennzeichnet, dass**
die Profillinie der Zahnflanke am Zahnfuß (4) und/oder am Zahnkopf (5) zumindest parabolisch derart zurückgenommen ist, dass die Profildifferenz zwischen der theoretischen Flanke der Evolventenverzahnung und der zurückgenommenen Flanke als Funktion des Abrollweges über das Profil der Evolventenverzahnung wenigstens mit der zweiten Potenz ansteigt.

5. Steckverzahnung nach einem der Ansprüche 2 bis 4,
wobei die Zahnfüße (4) am Fußkreis zwischen 0,2% und 3% der Zahndicke am Teilkreis zurückgenommen sind und/oder die Zahnköpfe (5) am Kopfkreis zwischen 0,1% und 2% der Zahndicke am Teilkreis zurückgenommen sind.

6. Steckverzahnung nach einem der vorhergehenden Ansprüche,
wobei eine Mantellinie als Verlauf des Bodens zwischen zwei Zähnen in Breitenrichtung symmetrisch gewölbt ist

7. Steckverzahnung nach einem der vorhergehenden Ansprüche,
wobei die Wölbung der Flankenlinie (12) derart ausgebildet ist dass die Differenz der größten Dicke eines jeden Zahns (2) auf der Höhe des Teilkreises und der kleinsten Dicke eines jeden Zahns (2) auf der Höhe des Teilkreises, einem Wert zwischen 3% und 20% der größten Dicke eines jeden Zahns (2) auf der Höhe des Teilkreises entspricht.

8. Steckverzahnung nach einem der vorhergehenden Ansprüche,
wobei die Schränkung der Zähne (2) durch eine maximale Profilwinkelabweichung (ϕ) zwischen 0,3° und 1,5° gebildet ist.

9. Steckverzahnung nach einem der vorhergehenden Ansprüche,
wobei die Schränkung der Zähne (2) in Richtung der Flanke der Zähne (2) im Wesentlichen parabelförmig ausgebildet ist.

10. Vorrichtung zum Antrieb einer Walze einer hüttenmännischen Anlage, umfassend eine Welle (13) und eine Steckverzahnung (16, 17, 18, 19) nach einem der vorhergehenden Ansprüche, wobei die Welle (15) die Verzahnung (16, 17) der Steckverzahnung (16, 17, 18, 19) aufweist.

11. Vorrichtung nach Anspruch 10, **dadurch gekennzeichnet, dass** die Verzahnung (18, 17) an beiden Enden der Welle (15) ausgebildet ist.

12. Vorrichtung nach Anspruch 10 oder 11, **dadurch gekennzeichnet, dass** die Welle (15) und die Walze (13) in einem Auslenkwinkel von mehr als 0°, insbesondere mehr als 0,2°, zueinander angeordnet sind.

13. Vorrichtung nach Anspruch 12, **dadurch gekennzeichnet, dass** der Auslenkwinkel nicht mehr als etwa 5°, insbesondere zwischen etwa 2° und etwa 5°, beträgt.

14. Verfahren zur Herstellung einer Steckverzahnung mit einer in eine zweite Verzahnung eingreifenden Verzahnung (1) nach einem der Ansprüche 1 bis 9, umfassend die Schritte:
Erstellung einer Verzahnung mit mehreren Zähnen,
**dadurch gekennzeichnet, dass**
die folgenden Schritte einer Nachbearbeitung an der erstellten Verzahnung durchgeführt werden, so dass die Rotationsachse der Verzahnung (1) unter einem Auslenkwinkel zur Rotationsachse der zweiten Verzahnung betrieben werden kann:
: Bearbeiten der Flankenlinien (12) der Zähne (2) so, dass diese eine Wölbung aufweisen,
Bearbeiten der Zähne (2) so, dass diese mit einer Schränkung in Form einer Profitwinketabweichung ϕ in Richtung der Flanke des Zahns (2) ausgebildet werden.

15. Verfahren nach Anspruch 14,
**dadurch gekennzeichnet, dass**
die Nachbearbeitung zusätzlich den folgenden Schritt umfasst:
Bearbeiten der Flanken der Zahnköpfe der Zähne (2) so, dass diese gegenüber einer Evolventenform zurückgenommen werden.

16. Verfahren nach Anspruch 14 oder 15,
**dadurch gekennzeichnet, dass**
die Nachbearbeitung zusätzlich den folgenden Schritt umfasst:
Bearbeiten der Flanken der Zahnfüsse der Zähne (2) so, dass diese gegenüber einer Evolventenform zurückgenommen werden.

17. Verfahren nach Anspruch 15 oder 16,
wobei die Profillinie am Zahnfuß (4) und/oder am Zahnkopf (5) durch Nachbearbeiten zumindest parabolisch derart zurückgenommen ist, dass die Profildifferenz zwischen der theoretischen Flanke der Evolventenverzahnung und der erfindungsgemäß zurückgenommenen Flanke als Funktion des Abroliweges über das Profil der Evolventenverzahnung wenigstens mit der zweiten Potenz ansteigt.

18. Verfahren nach einem der Ansprüche 14 bis 17,
**dadurch gekennzeichnet, dass**
die Nachbearbeitung zusätzlich den folgenden Schritt umfasst:
Bearbeiten der Mantellinie der Verzahnung (1) als Verlauf des Bodens zwischen zwei Zähnen, so dass die Mantellinie in Breitenrichtung eine Wölbung aufweist.

19. Verfahren nach einem der Ansprüche 14 bis 18,
**dadurch gekennzeichnet, dass**
die Nachbearbeitung in mindestens einem der Schritte durch mindestens einen Schleifvorgang erfolgt oder durch genau einen Schleifvorgang pro Zsthnflanke erfolgt.

## Claims

1. Spline toothing with a toothing (1) engaging in a second toothing, particularly of a drive spindle for driving a roll (13) in rolling mills or continuous casting plants, wherein the toothing (1) comprises a plurality of teeth (2), wherein a flank line (12) of the teeth (2) has a camber and wherein a deflection angle between the rotational axis of the second toothing and the rotational axis of the toothing is formed, **characterised in that** the teeth (2) are configured with a twist in the form of a profile angle deviation ϕ in the direction of the flank of the tooth (2).

2. Spline toothing according to claim 1, **characterised in that** the flanks of the teeth (2) are formed with a tooth tip profile relief relative to an involute form.

3. Spline toothing according to claim 1 or 2, **characterised in that** the flanks of the teeth (2) are formed with a tooth root profile relief relative to an involute form.

4. Spline toothing according to claim 2 or 3, **characterised in that** the profile line of the tooth flank at the tooth root (4) and/or at the tooth tip (5) is so relieved at least parabolically that the profile difference between the theoretical flank of the involute toothing and the relieved flank increases as a function of the rolling path over the profile of the involute toothing at least by the second power.

5. Spline toothing according to any one of claims 2 to 4, wherein the tooth roots (4) are relieved at the root circle between 0.2% and 3% of the tooth thickness at the pitch circle and/or the tooth tips (5) are relieved at the tip circle between 0.1% and 2% of the tooth thickness at the pitch circle.

6. Spline toothing according to any one of the preceding claims, wherein a surface line as course of the base between two teeth is symmetrically cambered in width direction.

7. Spline toothing according to any one of the preceding claims, wherein the camber of the flank line (12) is formed so that the difference of the greatest thickness of each tooth (2) at the level of the pitch circle and the smallest thickness of each tooth (2) at the level of the pitch circle corresponds with a value between 3% and 20% of the greatest thickness of
each tooth (2) at the level of the pitch circle.

8. Spline toothing according to any one of the preceding claims, wherein the twist of the teeth (2) is formed by a maximum profile angle deviation (ϕ) between 0.3° and 1.5°.

9. Spline toothing according to any one of the preceding claims, wherein the twist of the teeth (2) in the direction of the flank of the teeth (2) is formed to be substantially parabolic.

10. Device for drive of a roll of a metallurgical plant, comprising a shaft (15) and a spline toothing (16, 17, 18, 19) according to any one of the preceding claims, wherein the shaft (15) has the toothing (16, 17) of the spline toothing (16, 17, 18, 19).

11. Device according to claim 10, **characterised in that** the toothing (16, 17) is formed at both ends of the shaft (15).

12. Device according to claim 10 or 11, **characterised in that** the shaft (15) and the roll (13) are arranged at a deflection angle of more than 0°, particularly more than 0.2°, relative to one another.

13. Device according to claim 12, **characterised in that** the deflection angle is not more than approximately 5°, in particular is between approximately 2° and approximately 5°.

14. Method of producing a spline toothing with a toothing (1), which engages in a second toothing, according to any one of claims 1 to 9, comprising the steps of:
constructing a toothing with a plurality of teeth,
**characterised in that** the following steps of finishing are carried out at the constructed toothing so that the rotational axis of the toothing (1) can run at an angle of deflection relative to the rotational axis of the second toothing:
processing the flank lines (12) of the teeth (2) so that these have a camber and
processing the teeth (2) so that these are configured with a twist in the form of a profile angle deviation ϕ in the direction of the flank of the tooth (2).

15. Method according to claim 14, **characterised in that** the finishing additionally comprises the following step:
processing the flanks of the tooth tips of the teeth (2) so that these are relieved relative to an involute form.

16. Method according to claim 14 or 15, **characterised in that** the finishing additionally comprises the following step:
processing the flanks of the tooth roots of the teeth (2) so that these are relieved relative to an involute form.

17. Method according to claim 15 or 16, wherein the profile line at the tooth root (4) and/or at the tooth tip (5) is so relieved at least parabolically by finishing that the profile difference between the theoretical flank of the involute toothing and the flank relieved in accordance with the invention increases as a function of the rolling path over the profile of the involute toothing at least by the second power.

18. Method according to any one of claims 14 to 17, **characterised in that** the finishing additionally comprises the following step:
processing the surface line of the toothing (1) as the course of the base between two teeth so that the surface line has a camber in width direction.

19. Method according to any one of claims 14 to 18, **characterised in that** the finishing is carried out in at least one of the steps by at least one grinding process or is carried out by exactly one grinding process per tooth flank.

## Revendications

1. Denture à emboîtement comprenant une denture (1) qui vient s'engrener dans une deuxième denture, en particulier d'une bielle de commande pour l'entraînement d'un cylindre (13) dans des laminoirs ou des installations de coulée continue, la denture (1) comprenant plusieurs dents (2), une ligne des flancs (12) des dents (2) présentant une courbure et un angle de déviation étant formé entre l'axe de rotation de la deuxième denture et l'axe de rotation de la denture, **caractérisée en ce que** les dents (2) sont réalisées avec un décalage sous la forme d'une différence de l'angle d'incidence ϕ dans la direction du flanc de la dent (2).

2. Denture à emboîtement selon la revendication 1, **caractérisée en ce que** les flancs des dents (2) sont réalisés avec un retrait du profil de la tête de la dent par rapport à une forme de développante.

3. Denture à emboîtement selon la revendication 1 ou 2, **caractérisée en ce que** les flancs des dents (2) sont réalisés avec un retrait du profil du pied de la dent par rapport à une forme de développante.

4. Denture à emboîtement selon la revendication 2 ou 3, **caractérisée en ce que** la ligne de profil du flanc de la dent au pied de la dent (4) et/ou à la tête de la dent (5) est soumise à un retrait au moins parabolique de manière telle que la différence de profil entre le flanc théorique de l'engrenage à développante et le flanc soumis à un retrait conformément à l'invention augmente à concurrence d'au moins la puissance deux en fonction de la voie de roulement sur le profil de l'engrenage à développante.

5. Denture à emboîtement selon l'une quelconque des revendications 2 à 4, dans laquelle les pieds des dents (4) au cercle de pied sont soumis à un retrait entre 0,2 % et 3 % de l'épaisseur de la dent au cercle partiel et/ou les têtes des dents (5) au cercle de tête sont soumis à un retrait entre 0,1 % et 2 % de l'épaisseur de la dent au cercle partiel.

6. Denture à emboîtement selon l'une quelconque des revendications précédentes, dans laquelle une génératrice, à titre d'allure de la base entre deux dents, présente une courbure symétrique dans la direction en largeur.

7. Denture à emboîtement selon l'une quelconque des revendications précédentes, dans laquelle la courbure de la ligne des flancs (12) est réalisée de manière telle que la différence entre l'épaisseur maximale de chacune des dents (2) à hauteur du cercle partiel et l'épaisseur minimale de chacune des dents (2) à hauteur du cercle partiel correspond à une valeur entre 3 % et à 20 % de l'épaisseur maximale de chacune des dents (2) à hauteur du cercle partiel.

8. Denture à emboîtement selon l'une quelconque des revendications précédentes, dans laquelle le décalage des dents (2) est obtenu via une différence maximale de l'angle d'incidence (ϕ) entre 0,3° et 1,5°.

9. Denture à emboîtement selon l'une quelconque des revendications précédentes, dans laquelle le décalage des dents (2) dans la direction des flancs des dents (2) est réalisé essentiellement sous une forme parabolique.

10. Dispositif pour l'entraînement d'un cylindre d'une installation métallurgique, comprenant un arbre (15) et une denture à emboîtement (16, 17, 18, 19) selon l'une quelconque des revendications précédentes, dans lequel l'arbre (15) présente la denture (16, 17) de la denture à emboîtement (16, 17, 18, 19).

11. Dispositif selon la revendication (10), **caractérisé en ce que** la denture (16, 17) est réalisée aux deux extrémités de l'arbre (15).

12. Dispositif selon la revendication 10 au 11, **caractérisé en ce que** l'arbre (15) et le cylindre (13) sont disposés l'un par rapport à l'autre en formant un angle de déviation supérieur à 0°, en particulier supérieur à 0,2°.

13. Dispositif selon la revendication 12, **caractérisé en ce que** l'angle de déviation n'est pas supérieur à environ 5°, s'élève en particulier à une valeur entre environ 2° et environ 5°.

14. Procédé pour la fabrication d'une denture à emboîtement comprenant une denture (1) qui vient s'engrener dans une deuxième denture selon l'une quelconque des revendications 1 à 9, comprenant les étapes dans lesquelles :
on réalise une denture comprenant plusieurs dents ;
**caractérisé par le fait que** l'on met en oeuvre les étapes suivantes dans lesquelles on soumet la denture obtenue à un usinage ultérieur de manière telle que l'axe de rotation de la denture (1) peut être entraîné en formant un angle de déviation par rapport à l'axe de rotation de la deuxième denture, à savoir :
l'usinage des lignes de flancs (12) des dents (2) de manière telle que ces dernières présentent une courbure ;
l'usinage des dents (2) de manière telle que l'obtient ces dernières avec un décalage sous la forme d'une différence de l'angle d'incidence ϕ dans la direction du flanc de la dent (2).

15. Procédé selon la revendication 14, **caractérisé en ce que** le traitement ultérieur comprend en outre l'étape suivante dans laquelle :
on soumet les flancs des têtes des dents (2) à un usinage afin de les soumettre à un retrait par rapport à une forme de développante.

16. Procédé selon la revendication 14 ou 15 **caractérisé en ce que** le traitement ultérieur comprend en outre l'étape suivante dans laquelle :
on soumet les flancs des pieds des dents (2) à un usinage afin de les soumettre à un retrait par rapport à une forme de développante.

17. Procédé selon la revendication 15 ou 16, dans lequel la ligne de profil au pied de la dent (4) et/ou à la tête de la dent (5) est soumise, via un traitement ultérieur, à un retrait au moins parabolique de manière telle que la différence de profil entre le flanc théorique de l'engrenage à développante et le flanc soumis à un retrait conformément à l'invention augmente à concurrence d'au moins la puissance deux en fonction de la voie de roulement sur le profil de l'engrenage à développante.

18. Procédé selon l'une quelconque des revendications 14 à 17, **caractérisé en ce que** le traitement ultérieur comprend en outre l'étape suivante dans laquelle :
on soumet la génératrice de la denture (1), à titre d'allure de la base entre deux dents, de manière telle que la génératrice présente une courbure dans la direction en largeur.

19. Procédé selon l'une quelconque des revendications 14 à 18, **caractérisé en ce que** le traitement ultérieur a lieu dans au moins une des étapes, via au moins un processus de meulage ou via précisément un processus de meulage pour chaque flanc de dent.
